# EUROPEAN PATENT SPECIFICATION

(11) **EP 4 493 895 B1**
(45) Date of publication and mention of the grant of the patent: **05.08.2026**
(21) Application number: 23716150.0
(22) Date of filing: 16.03.2023
(51) Int. Cl.: G01J 5/00, F27D 19/00, F27B 17/00, F27D 21/00, G01J 5/04, G01J 5/08, F27B 9/40, G01J 5/05

(54) **FURNACE INCLUDING TEMPERATURE MEASURING DEVICE**
OFEN MIT TEMPERATURMESSVORRICHTUNG
FOUR COMPRENANT DISPOSITIF DE MESURE DE TEMPÉRATURE

(30) Priority: 18.03.2022 CN 202210272553
(43) Date of publication of application: 22.01.2025
(73) Proprietor: Illinois Tool Works Inc., Glenview, IL 60025 (US)
(72) Inventor: CHEN, Yuexin, Glenview, Illinois 60025 (US); LIU, Zhixue, Glenview, Illinois 60025 (US)
(74) Representative: HGF
(86) International application number: PCT/US2023/064556
(87) International publication number: WO 2023/178258

(56) References cited:
- EP-A2- 0 862 962
- WO-A1-2018/177241
- US-A- 4 969 035

## Description

### Technical Field

The present disclosure relates to a furnace, in particular to a furnace comprising a temperature measurement device.

### Background

In some furnaces comprising a heating zone and a cooling zone, the processing element absorbs heat in the heating zone and cold in the cooling zone to complete various processing processes. Photovoltaic devices, such as crystalline silicon-based solar cell silicon wafers, complete the sintering process in a sintering furnace, and the circuit board goes through the welding process in a reflow furnace to weld electronic components to the circuit board. In these furnaces, the amount of heat or cold absorbed by the processing element needs to be accurately controlled. US4969035A describes an apparatus for observing the interior of a furnace comprising a pinhole camera sited in or within the furnace housing and means for reproducing for viewing at a remote location the image depicted comprising elements in the camera responsive to a defined frequency spectra and an electrical signal transmission system for reproducing said image at the remote location. WO 2018/177241 relates to a dual-line drying and sintering furnace, comprising two supports arranged in parallel arranged on a main support. Two chain conveying devices are successively provided with a drying region, a sintering region and a cooling region from an input end to an output end respectively. Multiple furnace chambers capable of independently controlling the temperature are arranged in a sintering furnace body at intervals.

### Summary

At least one objective of the present disclosure in a first aspect is to provide a temperature measurement device for detecting the temperature of a processing element in a furnace chamber of a furnace wherein the top wall of the furnace has a furnace chamber top opening, comprising: a temperature detection component configured to detect the temperature of the processing element; a support shroud for supporting on the top wall around a furnace chamber top opening of the furnace, the support shroud having a shroud cavity within it in communication with the furnace chamber through the furnace chamber top opening; and a sealing isolation device connected to the support shroud; wherein the temperature detection component is supported over the support shroud, the sealing isolation device configured to sealingly enclose the shroud cavity from above so that the temperature detection component can be isolated from gas within the furnace chamber.

According to the first aspect described above, the support shroud has a shroud top opening and a shroud bottom opening, the shroud top opening and the shroud bottom opening being in communication through the shroud cavity; the sealing isolation device being connected to the top of the support shroud and sealingly enclosing the shroud top opening to isolate the temperature detection component from gas within the furnace chamber.

According to the first aspect described above, the temperature detection component comprises an infrared camera; specifically, the support shroud and the sealing isolation device are configured to support the infrared camera to reach a preset height spaced from a top wall of the furnace to provide a detection field of view of the temperature of the processing element by the infrared camera through the shroud cavity and the furnace chamber top opening.

According to the first aspect described above, the sealing isolation device comprises: a mount connected to a top of the support shroud; a light-transmitting glass connected to the mount, and the light-transmitting glass configured to enclose the shroud top opening; a sealing cover provided above the light-transmitting glass and connected to the mount to sandwich the light-transmitting glass between the mount and the sealing cover.

According to the first aspect described above, the sealing isolation device further comprises a cleaning gas guide configured to direct the cleaning gas to blow towards a lower surface of the light-transmitting glass.

According to the first aspect described above, the cleaning gas guide includes a cleaning gas channel having at least one cleaning gas inlet and at least one cleaning gas outlet configured to direct a cleaning gas blowing to a lower surface of the light-transmitting glass to form a gas curtain.

According to the first aspect described above, the mount includes a mounting plate provided with a mounting plate window and a receiving channel for receiving the cleaning gas guide, a top of the cleaning gas guide being spaced a distance from a lower surface of the light-transmitting glass to form at least one cleaning gas outlet.

According to the first aspect described above, the sealing cover includes a sealing gasket and a cover plate, the sealing gasket being provided above the mount, the cover plate being connected above the sealing gasket, wherein the sealing gasket and the cover plate are provided with a sealing gasket window and a cover plate window, respectively, the sealing gasket window and the cover plate window are aligned with the light-transmitting glass to allow the detection field of view of the infrared camera.

According to the first aspect described above, the mounting plate includes a light-transmitting glass receiving groove formed downward from an upper surface of the mounting plate, the light-transmitting glass being received within the light-transmitting glass receiving groove; the mounting plate further includes a hole disposed below the light-transmitting glass receiving groove and a partition, the partition separating the hole to form the mounting plate window and the receiving channel.

According to the first aspect described above, the partition is supported on the support shroud and a slit is formed between an upper surface of the partition and the light-transmitting glass, wherein the cleaning gas guide is configured to direct cleaning gas to blow through the slit towards a lower surface of the light-transmitting glass.

According to the first aspect described above, the temperature measurement device further comprises a sewer bracket connected at a shroud bottom opening of the support shroud, wherein an outer surface of the top of the sewer bracket and an inner surface of the support shroud have at least one sewer between the sewer bracket provided to direct contaminants attached to the inner surface of the support shroud to be discharged along the outer surface of the sewer bracket to avoid contamination of the processing element by the contaminants.

According to the first aspect described above, the bottom of the support shroud includes a straight wall, and the sewer bracket includes a receiving segment disposed inside the support shroud and a discharge segment extending outwardly out of the support shroud, the top of the receiving segment and the straight wall spaced apart forming the sewer to receive the contaminants.

According to the first aspect described above, the sewer bracket is disposed about the shroud bottom opening and supported in the furnace chamber.

At least one object in a second aspect of the present disclosure is to provide a furnace, comprising: a furnace chamber comprising a heating zone and a cooling zone; a conveying device disposed within the furnace chamber and extending in a conveying direction, the conveying device configured to convey a processing element through the heating zone and the cooling zone; and at least one temperature measurement device according to any one of the first aspects, the temperature measurement device configured to detect the temperature of the processing element within the furnace chamber.

According to the second aspect described above, the furnace is a sintering furnace, the furnace chamber of the sintering furnace comprising a drying zone, a sintering zone, and a cooling zone, wherein the temperature measurement device is provided at an outlet of the drying zone and/or an outlet of the sintering zone.

Other objects and advantages of the present application will be apparent from the description of the present application hereinafter with reference to the accompanying drawings, and may help with a full understanding of the present disclosure. The invention is directed to a furnace as defined in independent claim 1. Preferred embodiments are defined in the dependent claims.

### Brief Description of Drawings

Fig. 1 is a perspective view of a sintering furnace according to one example of the present disclosure;
Fig. 2 is a schematic diagram of the sintering furnace shown in Fig. 1;
Fig. 3A is a perspective view of the furnace chamber and temperature measurement device of Fig. 1;
Fig. 3B is a partially exploded view of Fig. 3A;
Fig. 4 is a cross-sectional view of the furnace chamber and temperature measurement device of Fig. 1 along the width of the furnace chamber;
Fig. 5A is a perspective view of the temperature measurement device after the temperature detection component in Fig. 1 is eliminated;
Fig. 5B is an exploded view of Fig. 5A;
Fig. 5C is a cross-sectional view of Fig. 5A along the width of the furnace chamber;
Fig. 5D is a cross-sectional view of Fig. 5A along the length of the furnace chamber;
Fig. 6A is a perspective view of the temperature measurement device according to another example of the present disclosure;
Fig. 6B is a cross-sectional view of the temperature measurement device after temperature detection component shown in Fig. 6A is eliminated;
Fig. 6C is an exploded view of Fig. 6A;
Fig. 7 is a structural diagram of a controller according to one example of the present disclosure;
Fig. 8 is a method flow diagram of processing element according to one example of the present disclosure.

### Detailed Description

Various specific embodiments of the present disclosure will be described below with reference to the attached drawings that form a part of the present specification. It should be understood that while terms denoting orientation, such as "front," "rear," "upper," "lower," "left," "right," "top," "bottom," "inside," "outside," etc., are used in the present disclosure to describe various exemplary structural parts and elements of the present disclosure, these terms are used herein for convenience of illustration only and are determined based on the exemplary orientations shown in the attached drawings. Since the examples disclosed in the present disclosure may be disposed in different orientations, these terms denoting orientation are for illustrative purposes only and should not be considered as limiting.

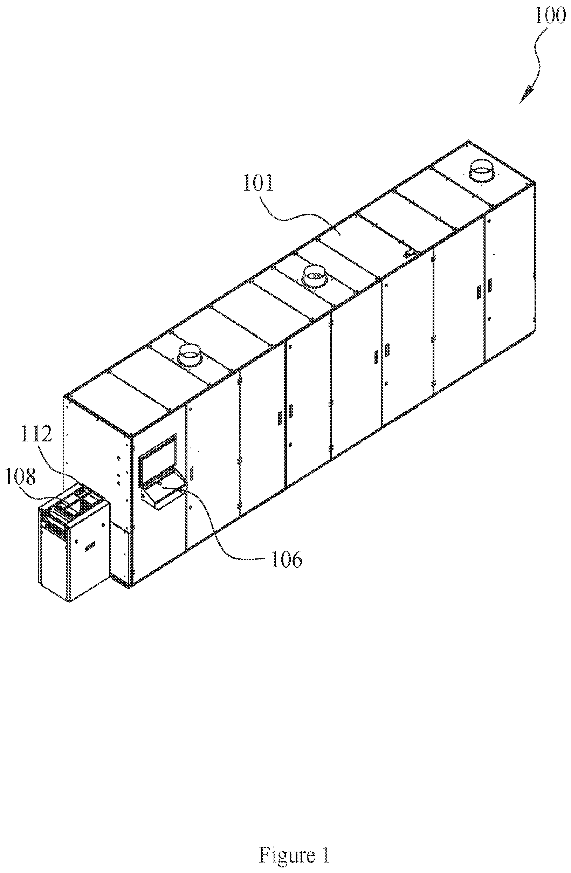

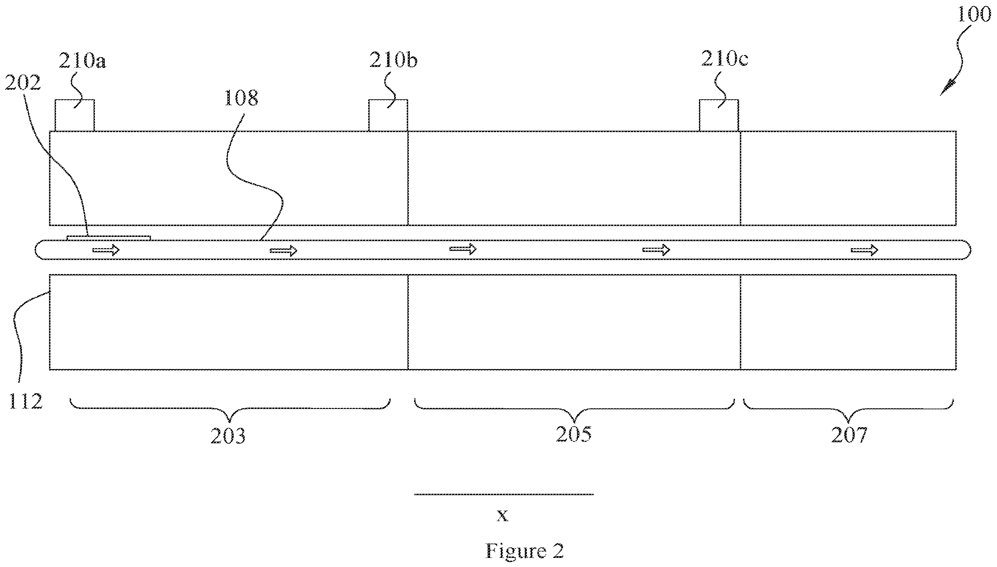

Fig. 1 is a perspective view of a sintering furnace 100 for illustrating an exterior structure of the sintering furnace 100, in accordance with one example of the present disclosure. As shown in Fig. 1, the sintering furnace 100 includes a housing 101, a furnace chamber 112, and a conveying device 108. The furnace chamber 112 is disposed within the housing 101, extending along the length of the sintering furnace 100 and through the housing 101. The conveying device 108 is used for carrying and moving the processing element 202 (see Fig. 2) in the furnace chamber 112 along the conveying direction to complete various processing processes of the processing element 202. In the present example, the conveying device 108 extends along the length direction of the sintering furnace 100 and through the furnace chamber 112, and the conveying direction is the length direction of the sintering furnace 100. The processing element 202 enters the furnace chamber 112 from one end in the length direction of the sintering furnace 100 and is outputted from the other end in the length direction of the sintering furnace 100 after various processing processes are completed in the furnace chamber 112. For ease of description below, the length direction of the sintering furnace 100 is simply referred to as the length direction and the width direction of the sintering furnace 100 is simply referred to as the width direction.

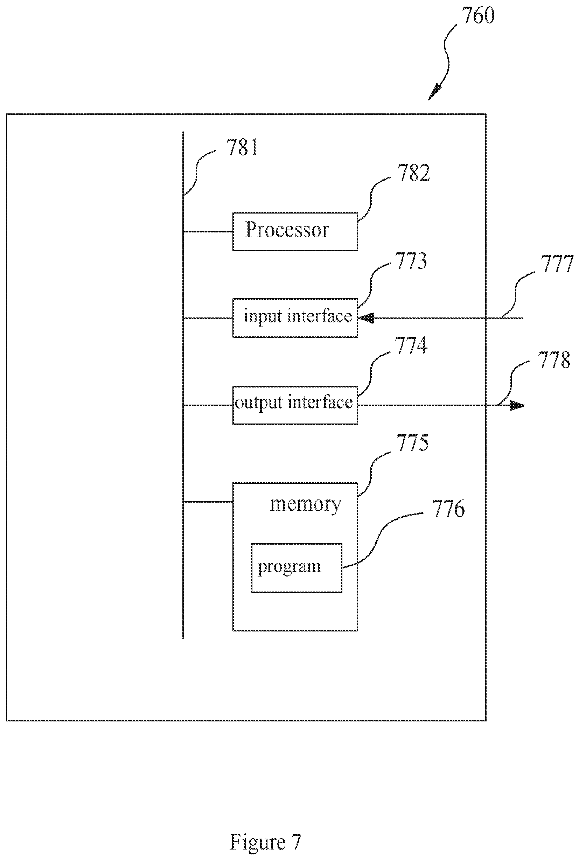

The sintering furnace 100 also includes a display device 106 for communicatively connecting with a controller 760 (see Fig. 7) of the sintering furnace 100 to enable input and output control of the sintering furnace 100.

Fig. 2 is a schematic diagram of a sintering furnace 100 for illustrating various processes of the sintering furnace 100 for the processing element 202. As shown in Fig. 2, the furnace chamber 112 of the sintering furnace 100 includes a plurality of processing zones featuring a heating zone and a cooling zone 207 arranged side by side along the length direction L, and the heating zone in this example includes a drying zone 203 and a sintering zone 205. The processing element 202 is carried on the conveying device 108, being outputted from the right end of the furnace chamber 112 after passing through the drying zone 203, the sintering zone 205, and the cooling zone 207 sequentially along the length direction L from the left end of the furnace chamber 112. Heating elements (not shown in the figures) are provided in the drying zone 203 and the sintering zone 205 to heat the processing element 202 being conveyed into the drying zone 203 and the sintering zone 205. Cooling elements (not shown in the figures) are provided in the cooling zone 207 to cool the processing element 202 being conveyed into the cooling zone 207.

In the present example, the processing element 202 is a photovoltaic device. In the drying zone 203, the photovoltaic device absorbs heat for drying to enable volatilization of organic matter or the like in the paste printed on the photovoltaic device. In the sintering zone 205, the photovoltaic device continues to absorb heat for sintering so that the electrode materials and silicon on the photovoltaic device are heated to a eutectic temperature, and the silicon atoms are dissolved in proportion into the molten electrode materials. In the cooling zone 207, the silicon atoms dissolved in the electrode materials are re-crystallized in a solid form such that an ohmic contact is formed between the electrode and the silicon, resulting in a solar cell.

The sintering furnace 100 also includes at least one temperature measurement device for detecting the temperature of the photovoltaic device when conveyed to a certain determined location within the furnace chamber 112 and providing temperature data to the controller 760 (see Fig. 7). As one example, the at least one temperature measurement device comprises a plurality of temperature measurement devices configured to detect the temperature of the photovoltaic device at two or more independent locations in the selected processing zones in the furnace chamber 112. In the present example, the selected treatment zones comprise a drying zone 203 and a sintering zone 205, the plurality of temperature measurement devices comprising a temperature measurement device 210a disposed at an inlet of the drying zone 203, a temperature measurement device 210b disposed at an outlet of the drying zone 203, and a temperature measurement device 210c disposed at an outlet of the sintering zone 205. By providing temperature measurement devices 210a, 210b, and 210c, the temperature of the photovoltaic device at the inlet of the drying zone 203, at the outlet of the drying zone 203, and at the outlet of the sintering zone 205 can be obtained. In other examples, the selected processing zones may also comprise a cooling zone 207, and the number of temperature measurement devices may also comprise more temperature measurement devices to determine the temperature of the photovoltaic device when the photovoltaic device is conveyed to more locations of the furnace chamber 112. In some examples, the temperature measurement device may include only the temperature measurement devices 210b and 210c, but without the temperature measurement device 210a.

Based on the temperature data detected and provided by the temperature measurement devices 210a, 210b, and 210c, the controller 760 is capable of providing closed loop control of the temperature of various processing zones of the sintering furnace 100. As one example, closed loop control may comprise a control method such as controlling the power of the heating element and/or cooling element, the conveying speed of the conveying device, etc. In particular, the controller 760 is configured to compare the temperature data of the photovoltaic device detected by the temperature measurement device to the preset temperature values of the respective processing zones and to provide closed loop control of the temperature of the respective processing zones according to the comparison results. As one specific example, the preset temperature value in the drying zone 203 is about 300°C. If the temperature data detected by the temperature measurement device 210b is greater than 300°C, the power of the heating element in the drying zone 203 is reduced or the conveying speed of the conveying device 108 is increased. If the temperature data detected by the temperature measurement device 210b is less than 300°C, the power of the heating element in the drying zone 203 is increased or the conveying speed of the conveying device 108 is reduced. Similarly, the temperature data detected by the temperature measurement device 210c is similarly compared to the preset temperature values of the sintering zone 205 and the temperature of the sintering zone 205 is closed loop controlled according to the comparison results.

It can be understood by those skilled in the art that although the temperature measurement device shown in this example is used for temperature detection of photovoltaic devices in a sintering furnace, in other examples, the temperature measurement device may also be used for temperature detection of circuit boards in a reflow furnace, a wave soldering furnace, etc. Depending on the particular furnace, a temperature measurement device may be provided at different locations to detect the temperature of the processing element at the desired location.

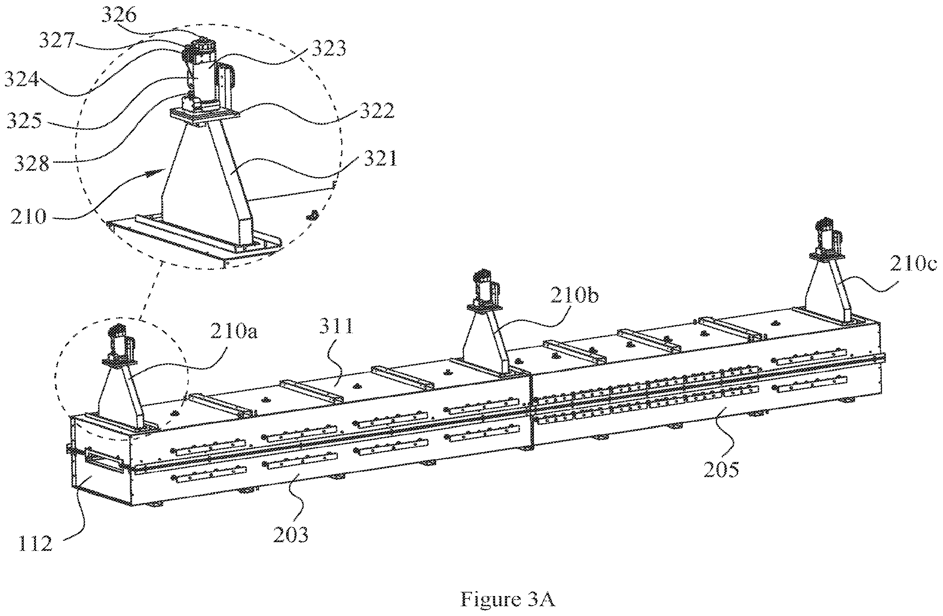

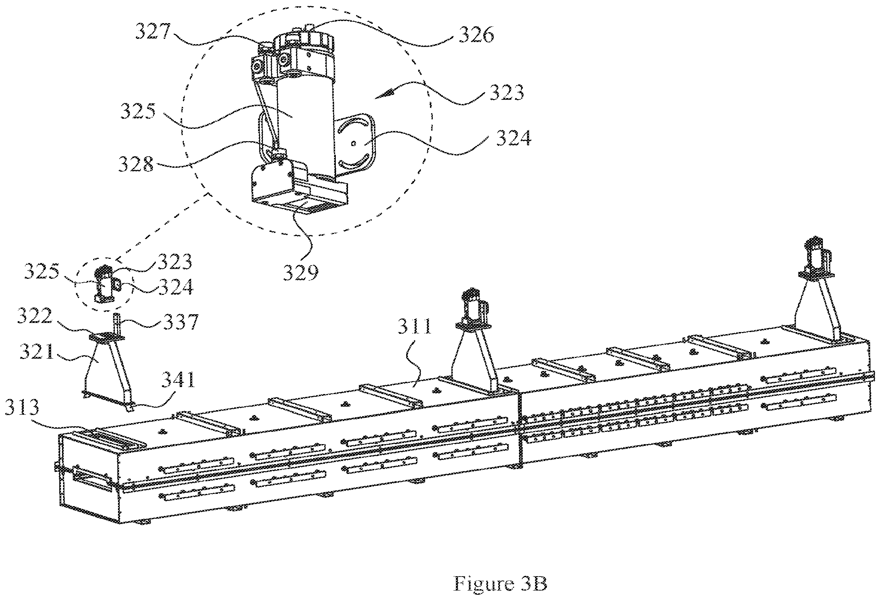

Figs. 3A and 3B illustrate a furnace chamber 112 and a temperature measurement device 210 for illustrating the general structure of the temperature measurement device 210 and the specific structure of the temperature detection component 323. Fig. 3A shows a perspective view of the furnace chamber 112 and the temperature measurement device 210, and Fig. 3B shows a partial exploded view of Fig. 3A at the temperature measurement device 210. Wherein, the cooling zone 207 of the sintering furnace 100 is eliminated in the furnace chamber 112 in Figs. 3A and 3B, and only the drying zone 203 and the sintering zone 205 are shown. As shown in Figs. 3A and 3B, the top wall 311 of the furnace chamber 112 is provided with a furnace chamber top opening 313, which is generally rectangular. Through the furnace chamber top opening 313, the interior of the furnace chamber 112 is in fluid communication with the exterior of the furnace chamber.

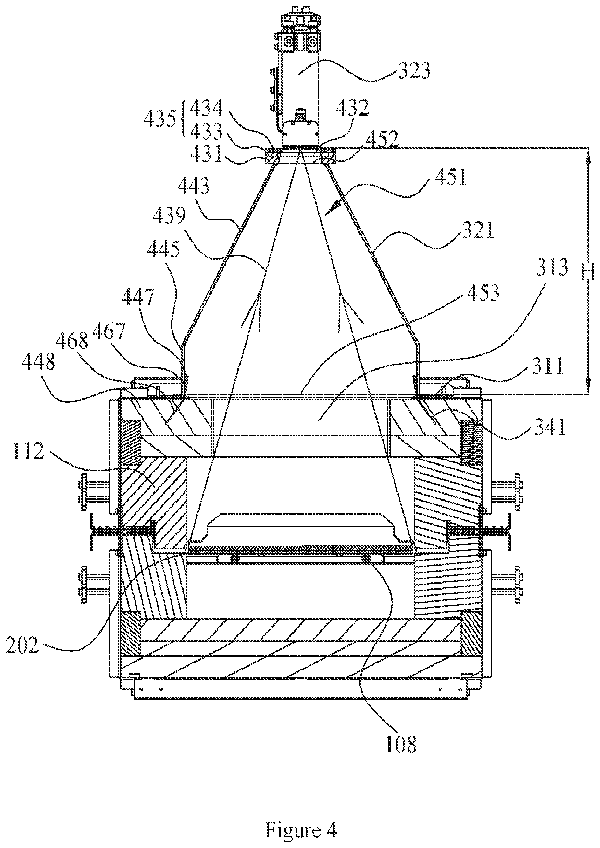

The temperature measurement device 210 includes a temperature detection component 323, a sealing isolation device 322, and a support shroud 321. The support shroud 321 is supported above the top wall 311 around the furnace chamber top opening 313. Internally, the support shroud 321 has a shroud cavity 451 (see Fig. 4) in fluid communication with the interior of the furnace chamber 112 through the furnace chamber top opening 313. The temperature detection component 323 is connected over the support shroud 321, which detects the temperature of the photovoltaic device inside the furnace chamber 112 through the shroud cavity 451 and the furnace chamber top opening 313. The sealing isolation device 322 is disposed between the temperature detection component 323 and the furnace chamber top opening 313 to enable the temperature detection component 323 to be isolated from the atmosphere within the furnace chamber 112 by the sealing isolation device 322. In the present example, the temperature detection component 323 includes an infrared camera 325 and a camera holder 324 wherein the infrared camera 325 is mounted to the camera holder 324. The sealing isolation device 322 includes a light-transmitting glass 432 (see Fig. 4) capable of blocking the passage of gas in the furnace chamber 112 while allowing infrared light transmission. As such, the infrared camera 325 can receive infrared radiation from the photovoltaic device inside the furnace chamber 112 by sealing the light-transmitting glass 432, the shroud cavity 451, and the furnace chamber top opening 313 of the sealing isolation device 322, thereby detecting the temperature of the photovoltaic device. In the present example, the infrared camera 325 is a linear scanning infrared camera 325. When the photovoltaic device is conveyed along the length direction by the conveying device 108, the temperature of the photovoltaic device in each width direction is obtained by scanning the infrared radiation of the photovoltaic device in each width direction, thereby obtaining the temperature data of the photovoltaic device. The infrared camera 325 includes a communication interface 326 for communication with the controller 760 to communicate temperature data of the photovoltaic device detected by the infrared camera 325 to the controller 760.

In the present example, the sealing isolation device 332 is connected at the top of the support shroud 321 and encloses the shroud top opening 452 of the support shroud 321 (see Fig. 4). The sealing isolation device 322 also includes a mounting lever 337 extending upwardly from its bottom for connecting the camera holder 324 to the sealing isolation device 322 to mount the infrared camera 325 over the sealing isolation device 322. In other examples, the sealing isolation device 322 may also be connected in other locations of the support shroud 321, only between the temperature detection component 323 and the furnace chamber top opening 313.

The camera holder 324 includes a water-cooling device 327, a cover 329, and a gas cooling device 328. The water-cooling device 327 is in fluid communication with the cooling water source, which surrounds the infrared camera 325 and is disposed on top of the infrared camera 325 for directing the flow of cooling water to cool the infrared camera 325. The cover 329 is an infrared light-transmitting glass disposed below the infrared camera 325 to protect the infrared camera 325 from below. The gas cooling device 328 is provided at the bottom of the infrared camera 325 for fluid communication with a cooling gas source, such as an inert gas source or a compressed gas source, for directing the cooling gas to blow towards the lower surface of the cover 329 for cleaning and cooling the cover 329. As such, the camera holder 324 is capable of protecting the infrared camera 325 to some extent.

The gas temperature in the furnace chamber 112 of the sintering furnace 100 is higher, particularly, the gas temperature in the sintering zone 205 may reach about 1,000-2,000°C, and the gas in the furnace chamber 112 is often also entrained with contaminants. While the camera holder 324 can be able to protect the infrared camera 325 to some extent, the camera holder 324 has limited protection against the infrared camera 325 when the gas temperature in the furnace chamber 112 is too high. Furthermore, the camera holder 324 needs to match the structure and shape of the infrared camera 325, making it less adaptable. By providing a sealing isolation device 332, the present disclosure can prevent gas inside the furnace chamber 112 from flowing out of the shroud top opening 452 of the support shroud 321, prevent environmental contamination caused by high-temperature gas flowing out, and better prevent high-temperature gas from affecting the infrared camera 325, thereby providing better protection. Furthermore, the sealing isolation device 332 does not need to be limited by the shape and structure of the infrared camera 325 for greater applicability.

The temperature measurement device 210 also includes a sewer bracket 341 connected to the bottom of the support shroud 321 and dilated outward in a width direction from the bottom edge of the support shroud 321. The sewer bracket 341 is used for directing the discharge of contaminants attached to the inner surface of the support shroud 321 to avoid contamination of the photovoltaic device. The specific structure of the sewer bracket 341 will be described in detail in connection with Fig. 4.

Fig. 4 is a partial cross-sectional view of the furnace chamber 112 and the temperature measurement device 210 in one width direction for illustrating the principle of detecting the temperature of the processing element 202 by the temperature detection component 323, in which the temperature detection component 323 is not cut. As shown in Fig. 4, the support shroud 321 has a shroud cavity 451 within it that forms a shroud top opening 452 at the top of the support shroud 321 and a shroud bottom opening 453 at the bottom of the support shroud 321; that is, the shroud top opening 452 and the shroud bottom opening 453 are in communication through the shroud cavity 451. The support shroud 321 and the sealing isolation device 322 are configured to support the infrared camera 325 to reach a preset height H spaced from the top wall 311 to provide a detection field of view of the infrared camera 325 to detect the temperature of the processing element 202 through the shroud cavity 451 and the furnace chamber top opening 313. In the present example, the infrared radiation of the processing element 202 in the width direction is received by the infrared camera 325 of the temperature detection component 323 after passing through the furnace chamber top opening 313, the shroud cavity 451, and the light-transmitting glass 432 along the light path 439. When the processing element 202 is conveyed along the length direction by the conveying device 108, the temperature detection component 323 is capable of scanning the temperature in various width directions of the processing element 202 to obtain temperature data of the processing element 202.

The support shroud 321 includes a pair of side walls disposed oppositely in a width direction, each side wall comprising a mutually connected beveled wall 443 and a straight wall 445. The bottom of the straight wall 445 is connected with the top wall 311 of the furnace chamber 112, the beveled wall 443 extending upwardly and oppositely from the top of the straight wall 445. As such, the shroud cavity 451 inside the support shroud 321 can provide the detection field of view needed for the infrared camera 325 to receive the light path 439. In some examples, the support shroud 321 may also be provided in other shapes, only to ensure that the shroud cavity 451 can provide the detection field of view required by the infrared camera 325 with the furnace chamber top opening 313.

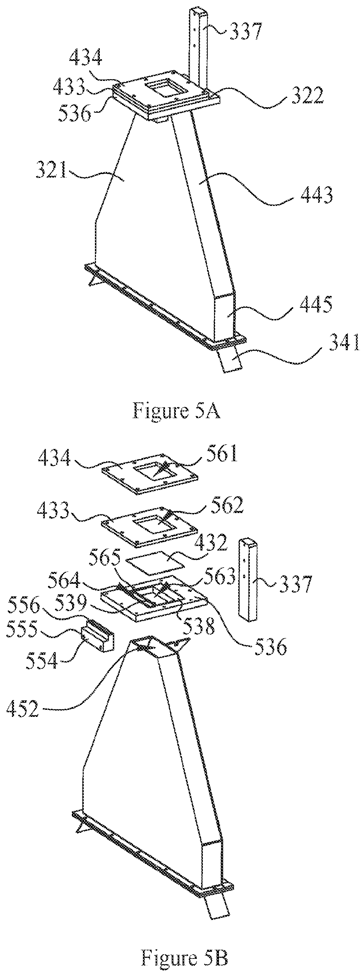

The sealing isolation device 332 includes a mount 431, a light-transmitting glass 432, and a sealing cover 435. The mount 431 is connected at the top of the support shroud 321 and the sealing cover 435 is connected above the mount 431. The sealing cover 435 includes a sealing gasket 433 and a cover plate 434, the light-transmitting glass 432 being sandwiched between the mount 431 and the sealing gasket 433 of the sealing cover 435, the cover plate 434 being overlying the sealing gasket 433. A more specific structure of the sealing isolation device 332 will be detailed in connection with Figs. 5A and 5B.

The sewer bracket 341 is connected at the shroud bottom opening 453 of the support shroud 321. The outer surface of the top of the sewer bracket 341 and the inner surface of the support shroud 321 are spaced to form at least one sewer 447 through which contaminants attached to the inner surface of the support shroud 321 can be expelled. In the present example, the sewer bracket 341 includes a receiving segment 467 disposed inside the support shroud 321 and a discharge segment 468, and a sewer 447 is formed between the top of the receiving segment 467 and the straight wall 445 of the support shroud 321. The discharge segment 468 extends outwardly from the bottom of the receiving segment 467 into the insulation layer 448 of the furnace chamber 112. As one example, the sewer bracket 341 is formed by an integrated bending process and the sewer bracket 341 is connected to the support shroud 321 through its top. In other examples, the sewer bracket 341 may also be provided in other shapes, or other parts of the sewer bracket 341 may be connected with the support shroud 321. By providing a sewer bracket 341 at the bottom of the support shroud 321, after the high temperature gas in the furnace chamber 112 enters the shroud cavity 451, contaminants entrained in the high temperature gas can condense or attach directly to the inner surface of the support shroud 321, and then be discharged into the insulation layer 448 of the furnace chamber 112 along the outer surface of the sewer bracket 341 through the sewer 447. As such, contaminants do not fall directly from the furnace chamber top opening 313 onto the processing element 202.

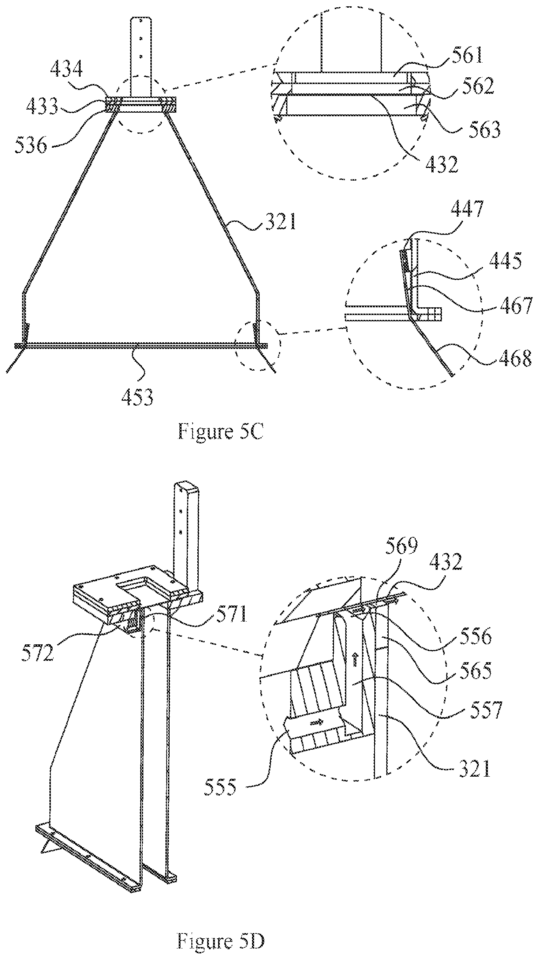

Figs. 5A-5D illustrate specific structures of the temperature measurement device after eliminating the temperature detection component, wherein Fig. 5A illustrates a perspective view of the sewer bracket 341, the support shroud 321, and the sealing isolation device 322, Fig. 5B illustrates an exploded view of the sealing isolation device 322 in Fig. 5A, Fig. 5C illustrates a cross-sectional view of Fig. 5A along the width direction, and Fig. 5D illustrates a cross-sectional view of Fig. 5A along the length direction. As shown in Figs. 5A-5D, the mount 431 of the sealing isolation device 332 includes a mounting plate 536 and a mounting lever 337, wherein the mounting level 337 is connected on an upper surface of the mounting plate 536 for connection with the temperature detection component 323. The central portion of the mounting plate 536 is provided with a light-transmitting glass receiving groove 538 that is recessed downwardly from the upper surface of the mounting plate 536. The groove depth of the light-transmitting glass receiving groove 538 generally matches the thickness of the light-transmitting glass 432 to enable the light-transmitting glass 432 to be received within the light-transmitting glass receiving groove 538.

The mounting plate 536 is provided with a mounting plate window 563 below the light-transmitting glass receiving groove 538. Similarly, a sealing gasket window 562 is provided at a corresponding location on the sealing gasket 433 and a cover plate window 561 is provided at a corresponding location on the cover plate 434. The mounting plate window 563, the sealing gasket window 562, and the cover plate window 561 are aligned with the light-transmitting glass 432 to give the detection field of view of the temperature detection component 323 and to allow the infrared radiation formed by the processing element 202 to be received by the infrared camera 325 of the temperature detection component 323 after passing through the mounting plate window 563, the light-transmitting glass 432, the sealing gasket window 562, and the cover plate window 561 sequentially.

In this example, the mounting plate 536 is provided with a hole 539 and a partition 565 below the light-transmitting glass receiving groove 538, and the partition 565 divides the hole 539 into a mounting plate window 563 and a receiving channel 564 side by side in the length direction. The hole 539 is larger in size than the sealing gasket window 562 and the cover plate window 561, but smaller in size than the light-transmitting glass receiving groove 538. As such, the sealing gasket 433 is capable of blocking gas leakage in the shroud cavity 451 in communication with the furnace chamber 112 from above the light-transmitting glass 432.

The sealing isolation device 322 also includes a cleaning gas guide 554 for directing the cleaning gas to blow towards the lower surface of the light-transmitting glass 432. The cleaning gas guide 554 is generally corner-shaped with a longitudinal portion 571 and a transverse portion 572 generally perpendicular to and interconnected with each other. The longitudinal portion 571 of the cleaning gas guide 554 is sandwiched between the hole 539 and the partition 565 and received in the receiving channel 564, and the top of the longitudinal portion 571 is spaced a distance from the light-transmitting glass 432. The transverse portion 572 of the cleaning gas guide 554 is connected below the mounting plate 536 and substantially parallel to the mounting plate 536. A cleaning gas channel 557 is provided in the cleaning gas guide 554 having at least one cleaning gas inlet 555 and at least one cleaning gas outlet 556. In the present example, the cleaning gas channel 557 has two cleaning gas inlets 555 and one cleaning gas outlet 556, a portion of the cleaning gas channel 557 being disposed within the transverse portion 572 and extending parallel to the transverse portion 572, the other portion being disposed within the longitudinal portion 571 and extending parallel to the longitudinal portion 571. Two clean gas inlets 555 are located outboard of the transverse portion 572, both for fluid communication with an inert gas source or compressed air source to input the clean gas into the clean gas channel 557. The cleaning gas outlet 556 is located at the top of the longitudinal portion 571 and extends in a width direction to communicate with the two cleaning gas inlets 555, and the cleaning gas outlet 556 is spaced a distance from the lower surface of the light-transmitting glass 432 to blow cleaning gas out of the lower surface of the light-transmitting glass 432. As such, after the cleaning gas enters the cleaning gas channel 557 from the cleaning gas inlet 555, it flows transversely, then upwards to the top of the longitudinal portion 571 and blows from the cleaning gas outlet 556 towards the lower surface of the light-transmitting glass 432.

In the present example, the upper surface of the partition 565 is generally aligned with the height of the top of the longitudinal portion 571 and the sides are aligned with the support shroud 321. That is, the upper surface of the partition 565 is spaced a distance from the lower surface of the light-transmitting glass 432, such as forming a slit 569. By providing the slit 569, the cleaning gas blown out from the cleaning gas outlet 556 can continue to flow along the light-transmitting glass 432 to form a gas curtain, on the one hand for cleaning the lower surface of the light-transmitting glass 432, and on the other hand for preventing gas leakage from under the light-transmitting glass 432. In other examples, the cleaning gas guide 554 may also be provided in other shapes and structures to achieve the same effect.

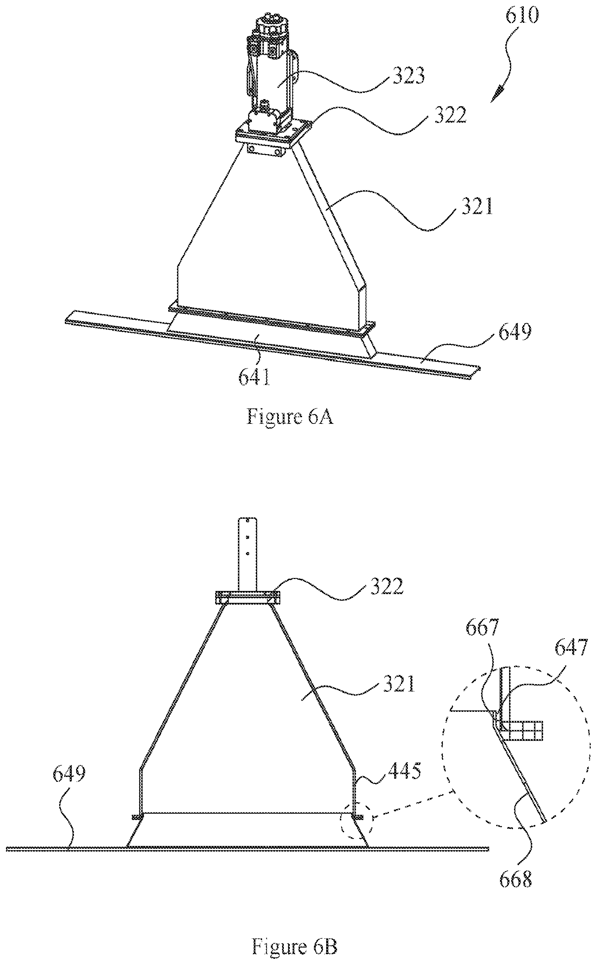

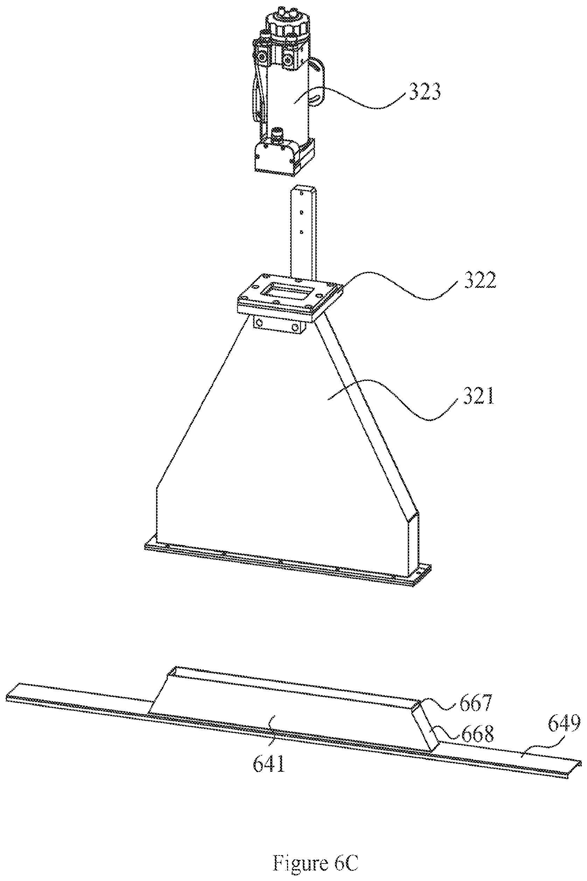

Figs. 6A-6C show the specific structures of the temperature measurement device 610 in another example of the present disclosure, wherein Fig. 6A is a perspective view of the temperature measurement device 610, Fig. 6B is a cross-sectional view of the temperature measurement device 610 along the width direction after the temperature detection component 323 is eliminated, and Fig. 6C is an exploded view of the temperature measurement device 610. As shown in Figs. 6A-6C, the structures of the temperature measurement device 610 and the temperature measurement device 210 are generally the same, and both include a temperature detection component 323, a sealing isolation device 322, and a support shroud 321, except that the structure of the sewer bracket 641 in the temperature measurement device 610 is different from the structure of the sewer bracket 341 in the temperature measurement device 210.

In particular, the sewer bracket 641 includes a receiving segment 667 and a discharge segment 668 interconnected with each other, wherein the receiving segment 667 is disposed inside the support shroud 321, and the receiving segment 667 and the straight wall 445 of the support shroud 321 are spaced to form a sewer 647. The discharge segment 668 extends outwardly from the bottom of the receiving segment 667. The bottom of the discharge segment 668 is connected with a support plate 649 into which the discharge segment 668 and the support plate 649 extend into the insulation layer 448 of the furnace chamber 112. In the present example, the sewer bracket 641 is no longer directly connected with the support shroud 321, but rather with the furnace chamber 112 through the support plate 649. When the support shroud 321 is connected to the top wall 311 of the furnace chamber 112, the relative position of the sewer bracket 641 and the support shroud 321 can also be fixed. And in the present example, the receiving segment 667 and the discharge segment 668 are provided as rings so that the sewer bracket 641 is highly stable. Furthermore, in the present example, the receiving segment 667 is substantially parallel to the straight wall 445 to facilitate downward flow of contaminants upon entry from the sewer 647. The sewer bracket 641 in this example provides more convenience for processing and manufacturing than the sewer bracket 341.

Fig. 7 is a schematic block diagram of a controller 760. As shown in Fig. 7, the controller 760 includes a bus 781, a processor 782, an input interface 773, an output interface 774, and a memory 775 featuring a control program 776. Various components of the controller 760, including the processor 782, the input interface 773, the output interface 774, and the memory 775, are in communication with the bus 781 to enable the processor 782 to control the operations of the input interface 773, the output interface 774, and the memory 775. Specifically, the memory 775 is used for storing programs, instructions, and data, while the processor 782 reads programs, instructions, and data from the memory 775 and can write data to the memory 775. By executing the memory 775 to read the programs and instructions, etc., the processor 782 controls the operations of the input interface 773 and the output interface 774.

As shown in Fig. 7, the input interface 773 is communicatively connected with the temperature measurement device 210 and the display device 106 by connection 777 to receive temperature data provided by the temperature measurement device 210 and control instructions received by the display device 106 and store the temperature data and control instructions in the memory 775. The output interface 774 is communicatively connected with the heating element in the furnace chamber 112 of the sintering furnace 100 and the conveying device 108 by connection 778. By executing the program 776 and the received instructions in the memory 775, the controller 760 provides closed loop control of the temperature of various processing zones in the furnace chamber 112.

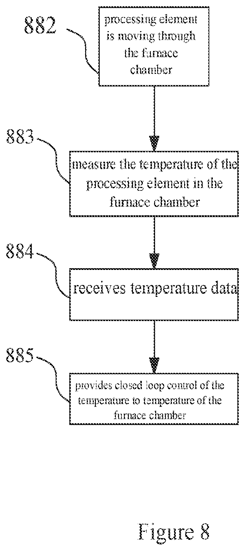

Fig. 8 is a method flow diagram of the processing element according to one example of the present disclosure. As shown in Fig. 8, in step 882, the processing element 202 is controlled to move through various processing zones of the furnace chamber 112 by the conveying device 108.

In step 883, the temperature of the processing element 202 at a respective location in the furnace chamber 112 is detected by the temperature measurement device 210, and the temperature measurement device 210 provides the detected temperature data.

In step 884, the controller 760 receives temperature data provided by temperature measurement device 210.

In step 885, the controller 760 provides closed loop control of the temperature of various processing zones of the furnace chamber according to the temperature data.

In existing sintering furnaces, gas temperatures in various processing zones of the furnace chamber are generally detected by thermal probes, and the settings of the sintering furnace are modified as needed by smart software, etc., to maintain the temperature within the specified range within various processing zones, thereby ensuring the processing yield of the photovoltaic device in the sintering furnace. During the operations of the sintering furnace, if the actual temperature of the photovoltaic device is inconsistent with the gas temperature in various processing zones of the furnace chamber, the heat or cold absorbed by the photovoltaic device in various processing zones of the sintering furnace cannot be accurately controlled, thereby causing the photovoltaic device to be damaged or defective.

The present disclosure directly detects the temperature of the photovoltaic device in the sintering furnace through a temperature measurement device, rather than detecting the temperature of the gas in the sintering furnace, for more directly controlling the amount of heat or cold absorbed by the photovoltaic device in various processing zones of the sintering furnace, thereby improving the yield of the product.

In addition, the temperature measurement device of the present disclosure can prevent gas inside the furnace chamber from flowing out of the shroud top opening of the support shroud by providing a sealing isolation device, prevent environmental pollution caused by high temperature gas flowing out, and better prevent high temperature gas from affecting the infrared camera, thereby providing better protection. In addition, the sealing isolation device does not need to be limited by the shape and structure of the infrared camera, making them more adaptable.

## Claims

1. A furnace (100) comprising:
a furnace chamber (112), wherein the furnace chamber (112) comprises heating zones (203, 205) and a cooling zone (207),
a conveying device (108) disposed within the furnace chamber (112) and extending in a conveying direction, the conveying device (108) configured to convey a processing element (202) through the heating zones (203, 205) and the cooling zone (207); and
a temperature measurement device for detecting the temperature of the processing element (202); wherein the top wall (311) of the furnace (100) has a furnace chamber top opening (313), comprising:
a temperature detection component (323) configured to detect the temperature of the processing element (202);
a support shroud (321) for supporting on the top wall (311) around a furnace chamber top opening (313) of the furnace (100), the support shroud (321) having a shroud cavity (451) inside, the shroud cavity (451) communicating with the furnace chamber (112) through the furnace chamber top opening (313);
a sealing isolation device (322) connected to the support shroud (321);
wherein the temperature detection component (323) is supported over the support shroud (321), the sealing isolation device (322) configured to sealingly enclose the shroud cavity (451) from above such that the temperature detection component (323) can be isolated from gas within the furnace chamber (112);
the support shroud (321) has a shroud top opening (452) and a shroud bottom opening (453), the shroud top opening (452) and the shroud bottom opening (453) communicating through the shroud cavity (451);
the sealing isolation device (322) is connected to the top of the support shroud (321) and sealingly encloses the shroud top opening (452) to isolate the temperature detection component (323) from gas within the furnace chamber (112);
the temperature detection component (323) comprises an infrared camera (325);
wherein the support shroud (321) and the sealing isolation device (322) are configured to support the infrared camera (325) to reach a preset height (H) spaced from a top wall (311) of the furnace (100) to provide a detection field of view of the temperature of the infrared camera (325) and to detect the processing element (202) through the shroud cavity (451) and the furnace chamber top opening (313); and
the sealing isolation device (322) comprises:
a mount (431) connected on top of the support shroud (321);
a light-transmitting glass (432) connected to the mount (431) and configured to enclose the shroud top opening (452);
a sealing cover (435) provided over the light-transmitting glass (432) and connected with the mount (431) to sandwich the light-transmitting glass (432) between the mount (431) and the sealing cover (435); and
the sealing isolation device (322) also includes a cleaning gas guide (554) configured to direct the cleaning gas to blow towards a lower surface of the light-transmitting glass (432),
and wherein the temperature measurement device (210) also comprises a sewer bracket (341) connected at a shroud bottom opening (453) of the support shroud (321), wherein an outer surface of a top of the sewer bracket (341) and an inner surface of the support shroud (321) have at least one sewer (447) disposed to direct contaminants attached to an inner surface of the support shroud (321) through the sewer (447) along an outer surface of the sewer bracket (341) to avoid contamination of the processing element (202).

2. The furnace according to Claim 1, wherein:
the cleaning gas guide (554) includes a cleaning gas channel (557) having at least one cleaning gas inlet (555) and at least one cleaning gas outlet (556) configured to direct the cleaning gas blowing towards a lower surface of the light-transmitting glass (432) to form a gas curtain.

3. The furnace according to Claim 1, wherein:
the mount (431) includes a mounting plate (536) on which a mounting plate window (563) and a receiving channel (564) are disposed, the receiving channel (564) for receiving the cleaning gas guide (554), the top of the cleaning gas guide (554) spaced a distance from the lower surface of the light-transmitting glass (432) to form at least one cleaning gas outlet (556).

4. The furnace according to Claim 3, wherein:
the sealing cover (435) includes a sealing gasket (433) and a cover plate (434), the sealing gasket being disposed over the mount (431), the cover plate (434) being connected over the sealing gasket (433), the sealing gasket (433) and the cover plate (434) being provided with a sealing gasket window (562) and a cover plate window (561), respectively, the sealing gasket window (562) and the cover plate window (561) being aligned with the light-transmitting glass (432) to allow the detection of the infrared camera (325).

5. The furnace according to Claim 4, wherein:
the mounting plate (536) comprises a light-transmitting glass receiving groove (538) formed downwardly from an upper surface of the mounting plate (536), the light-transmitting glass (432) being received within the light-transmitting glass receiving groove (538);
The mounting plate (536) also includes a hole (539) and a partition (565) disposed below the light-transmitting glass receiving groove (538), the partition (565) separating the hole (539) to form the mounting plate window (563) and the receiving channel (564).

6. The furnace according to Claim 5, wherein:
the partition (565) is supported on the support shroud (321) and a slit (569) is formed between an upper surface of the partition (565) and the light-transmitting glass (432), wherein the cleaning gas guide (554) is configured to direct cleaning gas to blow through the slit (569) to a lower surface of the light-transmitting glass (432).

7. The furnace according to any one of the preceding Claims, wherein:
the bottom of the support shroud (321) includes a straight wall (445) the sewer bracket (341) comprises a receiving segment (467) disposed inside the support shroud (321) and a discharge segment (468) extending outwardly out of the support shroud (321), the top of the receiving segment (467) being spaced from the straight wall (445) to form the sewer (447) to receive the contaminants.

8. The furnace according to Claim 7, wherein:
the sewer bracket (341) is disposed around the shroud bottom opening (453) and is supported in the furnace chamber (112).

9. The furnace according to any one of Claim 1 to 8, wherein:
the furnace (100) is a sintering furnace, the furnace chamber (112) of the furnace (100) comprising a drying zone (203), a sintering zone (205), and a cooling zone (207), wherein the temperature measurement device (210) is provided at an outlet of the drying zone (203) and/or an outlet of the sintering zone (205).

## Patentansprüche

1. Ofen (100), aufweisend:
eine Ofenkammer (112), wobei die Ofenkammer (112) Heizzonen (203, 205) und eine Kühlzone (207) aufweist,
eine Fördervorrichtung (108), die innerhalb der Ofenkammer (112) angeordnet ist und sich in einer Förderrichtung erstreckt, wobei die Fördervorrichtung (108) eingerichtet ist, ein Verarbeitungselement (202) durch die Heizzonen (203, 205) und die Kühlzone (207) zu befördern; und
eine Temperaturmessvorrichtung zum Erfassen der Temperatur des Verarbeitungselements (202); wobei die obere Wand (311) des Ofens (100) eine Ofenkammeroberöffnung (313) umfasst, aufweisend:
eine Temperaturerfassungskomponente (323), die so eingerichtet ist, dass sie die Temperatur des Verarbeitungselements (202) erfasst;
eine Stützummantelung (321) zum Stützen an der oberen Wand (311) um eine Ofenkammeroberöffnung (313) des Ofens (100) herum, wobei die Stützummantelung (321) einen Ummantelungshohlraum (451) im Inneren aufweist, wobei der Ummantelungshohlraum (451) durch die Ofenkammer-Oberöffnung (313) mit der Ofenkammer (112) in Verbindung steht;
eine Abdichtungsisolationsvorrichtung (322), die mit der Stützummantelung (321) verbunden ist;
wobei die Temperaturerfassungskomponente (323) über der Stützummantelung (321) getragen wird, wobei die Abdichtungsisolationsvorrichtung (322) so eingerichtet ist, dass sie den Ummantelungshohlraum (451) von oben her abdichtend umschließt, sodass die Temperaturerfassungskomponente (323) von Gas innerhalb der Ofenkammer (112) isoliert werden kann;
wobei die Stützummantelung (321) eine Ummantelungsoberöffnung (452) und eine Ummantelungsunteröffnung (453) aufweist, wobei die Ummantelungsoberöffnung (452) und die Ummantelungsunteröffnung (453) durch den Ummantelungshohlraum (451) in Verbindung stehen;
wobei die Abdichtungsisolationsvorrichtung (322) mit der Oberseite der Stützummantelung (321) verbunden ist und die Ummantelungsoberöffnung (452) dichtend umschließt, um die Temperaturerfassungskomponente (323) von Gas innerhalb der Ofenkammer (112) zu isolieren;
wobei die Temperaturerfassungskomponente (323) eine Infrarotkamera (325) aufweist;
wobei die Stützummantelung (321) und die Abdichtungsisolationsvorrichtung (322) eingerichtet sind, die Infrarotkamera (325) zu stützen, um eine voreingestellte Höhe (H) zu erreichen, die von einer oberen Wand (311) des Ofens (100) beabstandet ist, um ein Erfassungssichtfeld zur Temperaturmessung mit der Infrarotkamera (325) bereitzustellen und um das Verarbeitungselement (202) durch den Ummantelungshohlraum (451) und die Ofenkammeroberöffnung (313) zu erfassen; und
wobei die Abdichtungsisolationsvorrichtung (322) Folgendes aufweist:
eine Halterung (431), die an der Oberseite der Stützummantelung (321) verbunden ist;
ein lichtdurchlässiges Glas (432), das mit der Halterung (431) verbunden und so eingerichtet ist, dass es die Ummantelungsoberöffnung (452) umschließt;
eine Abdichtabdeckung (435), die über dem lichtdurchlässigen Glas (432) bereitgestellt und mit der Halterung (431) verbunden ist, um das lichtdurchlässige Glas (432) zwischen der Halterung (431) und der Abdichtabdeckung (435) sandwichartig einzuschließen; und
wobei die Abdichtungsisolationsvorrichtung (322) ferner eine Reinigungsgasführung (554) umfasst, die so eingerichtet ist, dass sie das Reinigungsgas so richtet, dass es zu einer unteren Fläche des lichtdurchlässigen Glases (432) geblasen wird,
und wobei die Temperaturmessvorrichtung (210) ebenfalls einen Ablaufhalter (341) aufweist, der an einer Ummantelungsunteröffnung (453) der Stützummantelung (321) verbunden ist, wobei eine Außenfläche einer Oberseite des Ablaufhalters (341) und eine Innenfläche der Stützummantelung (321) mindestens einen Ablauf (447) aufweisen, der angeordnet ist, um Verunreinigungen, die an einer Innenfläche der Stützummantelung (321) anhaften, durch den Ablauf (447) entlang einer Außenfläche des Ablaufhalters (341) zu leiten, um eine Verunreinigung des Verarbeitungselements (202) zu vermeiden.

2. Ofen nach Anspruch 1, wobei:
die Reinigungsgasführung (554) einen Reinigungsgaskanal (557) mit mindestens einem Reinigungsgaseinlass (555) und mindestens einem Reinigungsgasauslass (556) umfasst, eingerichtet, um das Reinigungsgas, das zu einer unteren Fläche des lichtdurchlässigen Glases (432) geblasen wird, zu leiten, um einen Gasvorhang zu bilden.

3. Ofen nach Anspruch 1, wobei:
die Halterung (431) eine Montageplatte (536) umfasst, auf der ein Montageplattenfenster (563) und ein Aufnahmekanal (564) angeordnet sind, wobei der Aufnahmekanal (564) zum Aufnehmen der Reinigungsgasführung (554) dient, wobei die Oberseite der Reinigungsgasführung (554) von der unteren Fläche des lichtdurchlässigen Glases (432) beabstandet ist, um mindestens einen Reinigungsgasauslass (556) zu bilden.

4. Ofen nach Anspruch 3, wobei:
die Abdichtungsabdeckung (435) eine Dichtung (433) und eine Abdeckplatte (434) umfasst, wobei die Dichtung über der Halterung (431) angeordnet ist, wobei die Abdeckplatte (434) über der Dichtung (433) verbunden ist, wobei die Dichtung (433) und die Abdeckplatte (434) mit einem Dichtungsfenster (562) bzw. einem Abdeckplattenfenster (561) versehen sind, wobei das Dichtungsfenster (562) und das Abdeckplattenfenster (561) mit dem lichtdurchlässigen Glas (432) ausgerichtet sind, um die Erfassung der Infrarotkamera (325) zu ermöglichen.

5. Ofen nach Anspruch 4, wobei:
die Montageplatte (536) eine Aufnahmenut (538) für das lichtdurchlässige Glas aufweist, die von einer oberen Fläche der Montageplatte (536) nach unten ausgebildet ist, wobei das lichtdurchlässige Glas (432) in der Aufnahmenut (538) für das lichtdurchlässige Glas aufgenommen ist;
die Montageplatte (536) ferner ein Loch (539) und eine unterhalb der Aufnahmenut (538) für das lichtdurchlässige Glas angeordnete Trennwand (565) aufweist, wobei die Trennwand (565) das Loch (539) zur Bildung des Montageplattenfensters (563) und des Aufnahmekanals (564) trennt.

6. Ofen nach Anspruch 5, wobei:
die Trennwand (565) auf der Stützummantelung (321) getragen wird und ein Schlitz (569) zwischen einer oberen Fläche der Trennwand (565) und dem lichtdurchlässigen Glas (432) ausgebildet ist, wobei die Reinigungsgasführung (554) eingerichtet ist, Reinigungsgas so zu leiten, dass es durch den Schlitz (569) zu einer unteren Fläche des lichtdurchlässigen Glases (432) geblasen wird.

7. Ofen nach einem der vorhergehenden Ansprüche, wobei:
der Boden der Stützummantelung (321) eine gerade Wand (445) umfasst, der Ablaufhalter (341) ein Aufnahmesegment (467), das innerhalb der Stützummantelung (321) angeordnet ist, und ein Auslasssegment (468), das sich aus der Stützummantelung (321) nach außen erstreckt, aufweist, wobei die Oberseite des Aufnahmesegments (467) von der geraden Wand (445) beabstandet ist, um den Ablauf (447) zur Aufnahme der Verunreinigungen zu bilden.

8. Ofen nach Anspruch 7, wobei:
der Ablaufhalter (341) um die Ummantelungsunteröffnung (453) herum angeordnet und in der Ofenkammer (112) gestützt wird.

9. Ofen nach einem der Ansprüche 1 bis 8, wobei:
der Ofen (100) ein Sinterofen ist, wobei die Ofenkammer (112) des Ofens (100) eine Trocknungszone (203), eine Sinterzone (205) und eine Kühlzone (207) aufweist, wobei die Temperaturmessvorrichtung (210) an einem Auslass der Trocknungszone (203) und/oder einem Auslass der Sinterzone (205) vorgesehen ist.

## Revendications

1. Four (100) comprenant :
une chambre de four (112), dans lequel la chambre de four (112) comprend des zones de chauffage (203, 205) et une zone de refroidissement (207),
un dispositif de transport (108) disposé au sein de la chambre de four (112) et s'étendant dans une direction de transport, le dispositif de transport (108) étant configuré pour transporter un élément de traitement (202) à travers les zones de chauffage (203, 205) et la zone de refroidissement (207) ; et
un dispositif de mesure de température destiné à détecter la température de l'élément de traitement (202) ; dans lequel la paroi haute (311) du four (100) possède une ouverture haute de chambre de four (313), comprenant :
un composant de détection de température (323) configuré pour détecter la température de l'élément de traitement (202) ;
un carénage de support (321) destiné à supporter sur la paroi haute (311) autour d'une ouverture haute de chambre de four (313) du four (100), le carénage de support (321) ayant une cavité de carénage (451) à l'intérieur, la cavité de carénage (451) communiquant avec la chambre de four (112) à travers l'ouverture haute de chambre de four (313) ;
un dispositif d'isolation étanche (322) connecté au carénage de support (321) ;
dans lequel le composant de détection de température (323) est supporté sur le carénage de support (321), le dispositif d'isolation étanche (322) étant configuré pour enfermer de manière étanche la cavité de carénage (451) depuis le dessus, de telle sorte que le composant de détection de température (323) puisse être isolé du gaz au sein de la chambre de four (112) ;
le carénage de support (321) possède une ouverture haute de carénage (452) et une ouverture basse de carénage (453), l'ouverture haute de carénage (452) et l'ouverture basse de carénage (453) communiquant à travers la cavité de carénage (451) ;
le dispositif d'isolation étanche (322) est connecté à la partie haute du carénage de support (321) et enferme de manière étanche l'ouverture haute du carénage (452) pour isoler le composant de détection de température (323) du gaz au sein de la chambre de four (112) ;
le composant de détection de température (323) comprend une caméra infrarouge (325) ;
dans lequel le carénage de support (321) et le dispositif d'isolation étanche (322) sont configurés pour supporter la caméra infrarouge (325) afin d'atteindre une hauteur prédéfinie (H) espacée d'une paroi haute (311) du four (100), afin de fournir un champ de vision de détection de la température de la caméra infrarouge (325) et de détecter l'élément de traitement (202) à travers la cavité de carénage (451) et l'ouverture haute de chambre de four (313) ; et
le dispositif d'isolation étanche (322) comprend :
une monture (431) connectée sur la partie haute du carénage de support (321) ;
un verre transmettant la lumière (432) connecté à la monture (431) et configuré pour enfermer l'ouverture haute de carénage (452) ;
un couvercle d'étanchéité (435) prévu au-dessus du verre transmettant la lumière (432) et connecté à la monture (431) pour prendre en sandwich le verre transmettant la lumière (432) entre la monture (431) et le couvercle d'étanchéité (435) ; et
le dispositif d'isolation étanche (322) comprend également un guide de gaz de nettoyage (554) configuré pour diriger le gaz de nettoyage afin de le souffler vers une surface inférieure du verre transmettant la lumière (432),
et dans lequel le dispositif de mesure de température (210) comprend également une ferrure d'évacuation (341) connectée au niveau d'une ouverture basse de carénage (453) du carénage de support (321), dans lequel une surface extérieure d'une partie haute de la ferrure d'évacuation (341) et une surface intérieure du carénage de support (321) ont au moins une évacuation (447) disposé pour diriger les contaminants fixés à une surface intérieure du carénage de support (321) à travers l'évacuation (447) le long d'une surface extérieure de la ferrure d'évacuation (341) afin d'éviter la contamination de l'élément de traitement (202).

2. Four selon la revendication 1, dans lequel :
le guide de gaz de nettoyage (554) comporte un canal de gaz de nettoyage (557) ayant au moins une entrée de gaz de nettoyage (555) et au moins une sortie de gaz de nettoyage (556) configurées pour diriger le gaz de nettoyage qui souffle vers une surface inférieure du verre transmettant la lumière (432) pour former un rideau de gaz.

3. Four selon la revendication 1, dans lequel :
la monture (431) comporte une plaque de montage (536) sur laquelle une fenêtre de plaque de montage (563) et un canal de réception (564) sont disposés, le canal de réception (564) étant destiné à recevoir le guide de gaz de nettoyage (554), la partie haute du guide de gaz de nettoyage (554) étant espacée d'une distance de la surface inférieure du verre transmettant la lumière (432) pour former au moins une sortie de gaz de nettoyage (556).

4. Four selon la revendication 3, dans lequel :
le couvercle d'étanchéité (435) comporte un joint d'étanchéité (433) et une plaque de couvercle (434), le joint d'étanchéité étant disposé sur la monture (431), la plaque de couvercle (434) étant connectée sur le joint d'étanchéité (433), le joint d'étanchéité (433) et la plaque de couvercle (434) étant pourvus d'une fenêtre de joint d'étanchéité (562) et d'une fenêtre de plaque de couvercle (561), respectivement, la fenêtre de joint d'étanchéité (562) et la fenêtre de plaque de couvercle (561) étant alignées avec le verre transmettant la lumière (432) pour permettre la détection de la caméra infrarouge (325).

5. Four selon la revendication 4, dans lequel :
la plaque de montage (536) comprend une rainure de réception de verre transmettant la lumière (538) formée vers le bas à partir d'une surface supérieure de la plaque de montage (536), le verre transmettant la lumière (432) étant reçu au sein de la rainure de réception de verre transmettant la lumière (538) ;
la plaque de montage (536) comporte également un trou (539) et une cloison (565) disposés sous la rainure de réception de verre transmettant la lumière (538), la cloison (565) séparant le trou (539) pour former la fenêtre de plaque de montage (563) et le canal de réception (564).

6. Four selon la revendication 5, dans lequel :
la cloison (565) est supportée sur le carénage de support (321) et une fente (569) est formée entre une surface supérieure de la cloison (565) et le verre transmettant la lumière (432), dans lequel le guide de gaz de nettoyage (554) est configuré pour diriger le gaz de nettoyage pour souffler à travers la fente (569) vers une surface inférieure du verre transmettant la lumière (432).

7. Four selon l'une quelconque des revendications précédentes, dans lequel :
la partie basse du carénage de support (321) comporte une paroi droite (445), la ferrure d'évacuation (341) comprend un segment de réception (467) disposé à l'intérieur du carénage de support (321) et un segment de refoulement (468) s'étendant vers l'extérieur du carénage de support (321), la partie haute du segment de réception (467) étant espacée de la paroi droite (445) pour former l'évacuation (447) afin de recevoir les contaminants.

8. Four selon la revendication 7, dans lequel :
la ferrure d'évacuation (341) est disposée autour de l'ouverture de partie basse de carénage (453) et est supportée dans la chambre de four (112).

9. Four selon l'une quelconque des revendications 1 à 8, dans lequel :
le four (100) est un four de frittage, la chambre de four (112) du four (100) comprenant une zone de séchage (203), une zone de frittage (205) et une zone de refroidissement (207), dans lequel le dispositif de mesure de température (210) est prévu au niveau d'une sortie de la zone de séchage (203) et/ou d'une sortie de la zone de frittage (205).
